# EUROPEAN PATENT APPLICATION

(11) **EP 3 273 379 A1**
(43) Date of publication of application: **24.01.2018**
(21) Application number: 16179835.0
(22) Date of filing: 18.07.2016
(51) Int. Cl.: G06F 21/44, H04L 29/06, H04W 4/00, H04W 12/06

(54) **IDENTIFICATION AUTHENTICATION METHOD AND SYSTEM**

(71) Applicant: DinBox Sverige AB, 113 26 Stockholm (SE)
(72) Inventor: ÅRMAN, Anders, 113 26 Stockholm (SE)
(74) Representative: Awapatent AB

(57) **Abstract**

The present specification generally relates to the field of authentication and more particularly to a method and system for authenticating an identification tag. The method and system is adapted to have a less complex administration that provides overall improvement in operability and comprises a list of known identifications, a list of known converted identifications, a tag, a input unit and a central system.

## Description

### Technical field

The present disclosure generally relates to the field of authentication and more particularly to a method and system for authenticating an identification tag.

### Technical background

The increased utilization of tags leads to an inconvenience coupled to a user carrying multiple tags. This may lead to a user scenario where the tags are interfused.

One solution may be assigning a tag to multiple uses by authenticating it for each of those utilizations.

Generally, authentication of radio frequency identification tags can be provided in a numerous of different way, each of them associated with their specific requirements and potential problems. For example, authentication can be performed before administration of the tags, or by an administrator which collects tags and assigns them to an access right.

Common for known authentication methods is that they require possession of the actual tag to be utilized.

However, this demands collection of the respective tags and associated administration for each additional authentication. This is not only demanding from time and cost perspective, but also undesirable from a user as the user will consign the tag for a time.

Thus, the inventor of the present invention have identified a need for improvements in providing authentication of an identification tag that is designed to overcome or at least mitigate the problems stated above, and which provides an authentication method and system which enables a less complex administration and that provides benefits for the user and service provider.

### Summary of the invention

An object of the present invention is to provide a system for providing authentication at least partly using a list of known identifications which overcomes the problems stated above.

A further object of the present invention is to provide a system with advantages relating to flexibility and/or scalability.

The present invention is defined according to the independent claims. Preferred embodiments are set forth in the dependent claims.

The invention is based on an insight that while a tag may be utilized in a plurality of different situations from a technical perspective, the different conversion methods used by different system providers to simplify the identification as received from the tag represents a problem as the simplification used varies between the system providers, thus comparison and interlinking between data from different providers cannot be implemented in known solutions. The invention solves this problem by creating a list of non converted identifications. In order to authorize a non converted identification, the invention converts the identification as received from the tag using conversion methods as used by different system providers. The converted identifications are then compared with lists with converted identifications as converted by the different system providers. Should the converted identification be found in the lists with converted identifications, the identification can be stored in the list of non converted identifications.

The term "tag" in this context means an electronic key arranged to communicate an identification over a radio signal.

According to one aspect of the invention, a method for authentication of a radio frequency identification (RFID) tag is provided. The method comprises detecting, comparing, converting and/or storing of an identification and/or an converted identification. The method detects a string of data in an encoded radio signal from the tag, wherein the string of data comprise an identification. The identification is compared with a list of known identifications. On a condition that the identification is not found in the list of known identifications, the identification is converted with a non-reversible conversion. The converted identification is compared with a list of known converted identifications. On a condition that the converted identification is found in the list of known converted identifications, the identification is stored in the list of known identifications in a position corresponding to the converted identification in the list of known converted identifications.

A method according to the present invention overcomes the problems stated previously. Suitable applications for a method according to the present invention may be a situation where a set of tags from one or more service provider are utilized and an additional functionality is to be added. As the existing infrastructure utilize the simplified, or converted, identifications there is no direct connection to the identification as received from the tag. By the method described in the aspects and embodiments, a list of known converted identifications can be used to create a list of autorized identifications with low demands on administration can be established while the user or owner of a tag can maintain possesion of the tag.

The term "list" in this context means a data structure with positions containing data elements. The list may be complete or comprise empty positions. Examples of possible data structures include arrays, matrixes and similar. The data structure may be continuous or comprise a plurality of linked segments or objects.

The term "non-reversible conversion" in this context means a conversion that is unable to reestablish the original condition after a change by the reverse of the change. For an example a non reversible conversion may be a conversion removing parts of the original data. Removal of data not used for a specific purpose may be used to simplify a process, the removal may however become a problem if new demands are put on the previously established process.

The term "list of known converted identifications" in this context means a list containing converted identifications as used by one or more service providers, the identifications having been converted by a non-reversible algorithm.

The term "corresponding" in this context means a position in a list that is coupled to another position, for an example a position in a 2-dimensional list may be coupled with other position in the same row or column. One example is representation of objects with a plurality of attributes each, these attributes are considered to be corresponding as they represent attributes of the same object. As a non limiting example these objects may be represented as a respective row in a 2-dimensional list, the attributes would then be represented as columns. As a further example, a position in an object based environment may be coupled with position in an object to which the first object refers to or is referred from. As a non limiting example the objects with a plurality of attributes each may be represented as a an object having a plurality of sub-objects, where the sub-objects represent the respective attributes.

In one embodiment, the radio frequency identification may utilize near field communication (NFC) to communicate with the tag.

In one embodiment, the identification in the list of known identifications may have a corresponding converted identification in the list of known converted identifications.

In one embodiment, the identification may comprise a unique serial number.

In one embodiment, the encoded radio signal may be an electronic product code (EPC) and the identification may comprise a unique serial number.

In one embodiment, the list of known converted identifications may be converted with the non-reversible conversion.

This embodiment allows for an identification which is detected from a tag to be compared with known converted identifications. By utilizing the same non-reversible conversion for the detected identification as utilized in creating the list of known converted identifications they can be compared and a match may be found.

In one embodiment, converting the identification may comprise converting the identification by using a plurality of algorithms, thus resulting into a plurality of respective converted identifications.

For an example a first system may be using a first algorithm and a second system may be using a second algorithm. In order to authorize a tag belonging to an unknown system the identification as received from the tag may be converted using both algorithms, the two resulting converted identifications may then be compared with known converted identifications. For an example a tag may be from a system utilizing one of three algorithms, then the identification as received from the tag may be converted using all three algorithms into three respective converted identifications. These three converted identifications may then be compared with the known converted identifications. The embodiment is not limited to one, two or three algorithms, but any number may be envisioned, the number depending on the number of available algorithms from the systems that the tag may originate from

This embodiment allows for an increased flexibility by accepting a tags originating from a plurality of systems into a single method.

In one embodiment, the detection may be performed at a input unit. The input unit may be positioned at the location at which an identification and/or authorisation is requested. For an example at a door, at an entryway, at an exit, at a mail box or similar. The input unit may be positioned at a distance from the location at which an identification is requested, for an example if a verification of functionality is requested at a position separated from the location at which the identification is requested.

The term "input unit" in this context means the unit receiving the string of data in the encoded radio signal from the tag. The input unit is typically a specific RFID reader, but several different antennas capable of receiving the radio signal can be envisioned as many antennas operate in the bands an RFID-tag typically operated within. For an example 120-150 kHz, 13.56 MHz, 433 MHz, 865-868 MHz, 902-928 MHz, 2450-5800 MHz and/or 3.1-10 GHz bands may be used. The reader may be a passive reader, active reader or battery-assisted reader and the interaction with the tag may be any of passive reader active tag, active reader passive tag, active reader active tag with or without battery assistance.

In one embodiment, the comparing, conversion and/or storing may be performed at a central system.

This embodiment allows for a simplified reading of the tag as the majority of the processing is performed at a central system, thus allowing for lower demands on the reading unit. By this a majority of the processing capability may be located at a location where it may be easily maintained. Further, since the processes typically are activated at a lower degree of time at a reader than the time at which it is idle, the overall processing requirements may be decreased.

In one embodiment, the list of known identifications may be kept at the reader. The list at the reader may be a copy from a central system or maintained locally.

This embodiment allows for quick access to the simpler operations by lessening the demands on interactions with a central system. This embodiment may be combined with having the conversation and comparison of converted identifications performed at a central system. This embodiment allows for a simplified reading of the tag as the majority of the processing is performed at a central system, thus allowing for lower demands on the reading unit, but also decreasing the demands on communications with the central unit. By this a majority of the processing capability may be located at a location where it may be easily maintained. Further, since the processes typically are activated at a lower degree of time at a reader than the time at which it is idle, the overall processing requirements may be decreased. Further, since parts of the comparison are performed at the reader, improvements in speed may be achieved.

In one embodiment, the method for authentication of a RFID-tag may comprise denying the RFID tag on a condition that the identification is not found in the list of known converted identifications.

The term "denied" in this context means that the RFID-tag is considered to be un-authorized for the application the tag is utilized for.

In one embodiment, the method for authentication of a RFID-tag may comprise accepting the RFID tag on a condition that the converted identification is found in the list of known converted identifications.

The term "accepting" in this context means that the RFID-tag is considered to be authorized for the application the tag is utilized for.

In one embodiment, the method for authentication of a RFID-tag may comprise accepting the RFID tag on a condition that the converted identification is found in the list of known identifications.

In one embodiment, an identification in the list of known identifications may have a corresponding user identification.

This embodiment allows for a more simplified way of administrating the authentication of the tags by providing a more intuitive format of information, for an example information relating to rights in a system may already be assigned to a user identification, in that case this embodiment decreases the comparison between different databases.

The term "user identification" in this context means a data element containing information which identifies a user or owner of the tag. The data element which identifies the user or owner may for an example be a name, a identification number or similar which aims at establishing a unique identity.

In one embodiment, an converted identification in the list of known converted identifications may have a corresponding user identification.

This embodiment allows for a more simplified way of administrating the authentication of the tags by providing a more intuitive format of information, for an example information relating to rights in a system may already be assigned to a user identification, in that case this embodiment decreases the comparison between different databases.

In one embodiment, the user identification is coupled to a group identity, for example users having access to A or users having access to B. The unique identification will in this case uniquely identify a user as belonging to one of the groups. Further, in this context the term user and owner are interchangeable and applies to a user or owner of the tag.

In one embodiment, the method for authentication of a RFID-tag may trigger a response that is dependent on the corresponding user identification on a condition that the RFID tag is accepted. The response may be one or a plurality of actions, as a non limiting example the response may send a signal to a system, send a signal to an internal system or similar. The response may be coupled to an indication to the user that the tag is accepted. The response and indication may happen simultaneously or serially.

In one embodiment, the triggered response may be opening a lock or a door.

This embodiment allows for a tag to be used as an authorized electronic key.

According to a further aspect of the invention, a system for authentication of an RFID tag is provided. The system comprises a input unit and a central system. The input unit is arranged to detect an identification in an encoded radio signal from a tag. The central system is arranged to compare, convert and store. The central system is arranged to compare the identification with a list of known identifications. The central system is further arranged to convert the identification, compare the converted identification with a list of known converted identifications. The central system is also arranged to store the identification in the list of known identifications at a position corresponding to the converted identification in the list of known converted identifications.

The input unit and the central system may for an example communicate by a xDSL modem, a cellular modem, a WLL tranciever, a PSTN modem, an optical fibre tranciever, another internet connection, or a combination thereof. General aspects of communication between units are well known in the art and will not be described in greater detail.

The system or parts thereof may be adapted to carry out any method described in disclosed embodiments.

In a further aspect, the invention relates to a computer program product. The computer program product is adapted to execute a method according to described embodiments in a unit as described in a system for authentication of an RFID tag according to described embodiments.

### Brief description of the appended drawings

The invention is described in the following illustrative and non-limiting detailed description of exemplary embodiments, with reference to the appended drawings, wherein:
Figure 1 is a schematic illustration of a method according to a first aspect of the present invention.
Figure 2 is a schematic illustration of a method according to one embodiment of the invention.
Figure 3 is a schematic illustration of an arrangement according to a second aspect of the present invention.

All figures are schematic, not necessarily to scale, and generally only show parts which are necessary in order to elucidate the invention, wherein other parts may be omitted or merely suggested. Throughout the figures the same reference signs designate the same, or essentially the same features.

### Detailed description of preferred embodiments of the invention

The present invention can be used to provide a system for providing authentication at least partly using a list of known identifications which results in more efficient authentication administration.

The invention is described in the following illustrative and non-limiting detailed description of exemplary embodiments, with reference to the appended drawings, wherein:

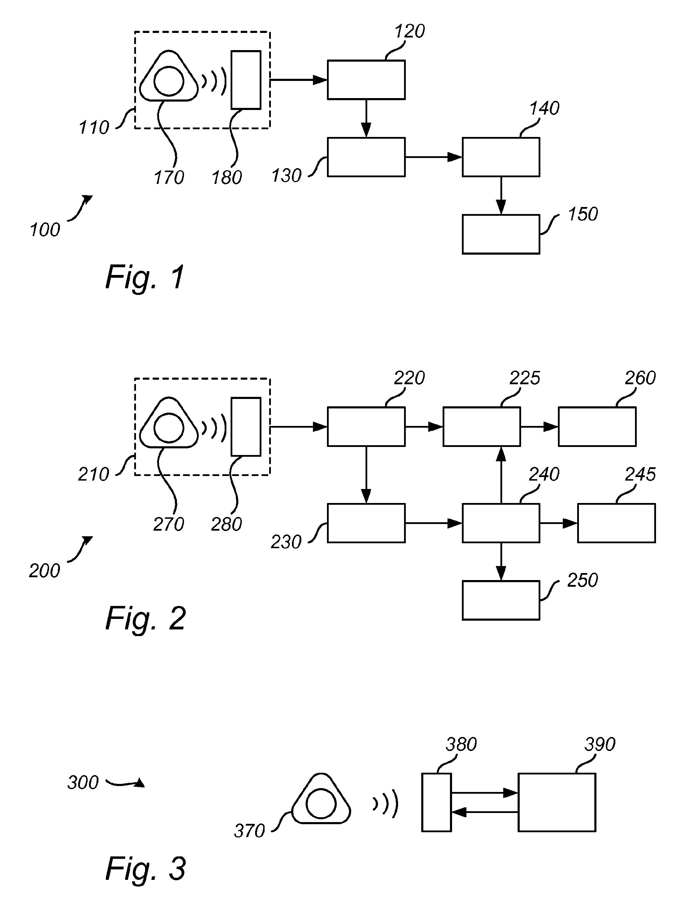

Figure 1 shows a schematic illustration 100 of a method for authentication of a radio frequency identification tag, according to an aspect of the present invention. The method comprises detecting, comparing, converting and/or storing of an identification and/or an converted identification. The method as illustrated detects 110 a string of data at an input unit 180. The string of data is in an encoded radio signal from a tag 170, wherein the string of data comprise an identification. The identification is compared 120 with a list of known identifications. On a condition that the identification is not found in the list of known identifications, the identification is converted 130 with a non-reversible conversion. The converted identification is compared 140 with a list of known converted identifications. The information in the list of known converted identifications can for an example be received from a service provider or similar. On a condition that the converted identification is found in the list of known converted identifications, the identification is stored 150 in the list of known identifications in a position corresponding to the converted identification in the list of known converted identifications.

Figure 2 shows a schematic illustration 200 of a method for authentication of a radio frequency identification tag, according to an embodiment of the present invention. The method comprises detecting, comparing, converting and/or storing of an identification and/or an converted identification. The method as illustrated detects 210 a string of data at an input unit 280. The string of data is in an encoded radio signal from a tag 270, wherein the string of data comprise an identification. The identification is compared 220 with a list of known identifications. On a condition that the identification is found in the list of known identifications, the identification is accepted 225. On a condition that the identification is not found in the list of known identifications, the identification is converted 230 with a non-reversible conversion. The converted identification is compared 240 with a list of known converted identifications. The information in the list of known converted identifications can for an example be received from a service provider or similar. On a condition that the converted identification is found in the list of known converted identifications, the identification is accepted 225 and stored 250. Storing 250 is performed in the list of known identifications in a position corresponding to the converted identification in the list of known converted identifications. On a condition that the converted identification is not found in the list of known converted identifications, the identification is denied 245. An identification or converted identification that is accepted 225 can trigger a response 260.

Figure 3 shows a schematic illustration of an arrangement 300 for authentication of a radio frequency identification tag, according to a second aspect of the present invention. The arrangement comprises a tag 370, a input unit 380 and a central system 390. The input unit 380 is arranged to detect an identification in an encoded radio signal from the tag 370. The central system 390 is arranged to receive the detected identification via the input unit 380 and compare the received identification with a list of known identifications. The central system 390 is further arranged to, on a condition that the received identification is not found in the list of known identifications, convert the identification and compare the converted identification with a list of known converted identifications. The central system 390 is further arranged to, on a condition that the converted identification is found in the list of known converted identifications, store the identification in the list of known identifications at a position corresponding to the converted identification in the list of known converted identifications.

Aspects of a general system for providing authentication of a radio frequency identification tag are well known in the art and will not be described in greater detail.

While specific embodiments have been described, the skilled person will understand that various modifications and alterations are conceivable within the scope as defined in the appended claims.

## Claims

1. Method for authentication of a radio frequency identification, RFID, tag (170, 270, 370), wherein the method comprises:
detecting (110, 210) a string of data in an encoded radio signal from the tag, wherein the string of data comprise an identification;
comparing (120, 220) the identification with a list of known identifications; and
on a condition that the identification is not found in the list of known identifications, converting (130, 230) the identification with a non-reversible conversion;
comparing (140, 240) the converted identification with a list of known converted identifications; and
on a condition that the converted identification is found in the list of known converted identifications, storing (150, 250) the identification in the list of known identifications in a position corresponding to the converted identification in the list of known converted identifications.

2. Method according to any preceeding claim, wherein the identification in the list of known identifications has a corresponding converted identification in the list of known converted identifications.

3. Method according to any preceeding claim, wherein the identification comprise a unique serial number.

4. Method according to any preceeding claim, wherein the list of known converted identifications is converted with the non-reversible conversion.

5. Method according to any preceeding claim, wherein converting the identification comprises converting the identification by using a plurality of algorithms into a plurality of respective converted identifications.

6. Method according to any preceeding claim, wherein the detection is performed at a input unit (180, 280, 380).

7. Method according to any preceeding claim, wherein the comparing, conversion and/or storing is performed at a central system (390).

8. Method according to any preceeding claim, further comprising denying (245) the RFID tag on a condition that the identification is not found in the list of known converted identifications.

9. Method according to any preceeding claim, further comprising accepting (225) the RFID tag on a condition that the converted identification is found in the list of known converted identifications.

10. Method according to any preceeding claim, further comprising accepting (225) the RFID tag on a condition that the identification is found in the list of known identifications.

11. Method according to any preceeding claim, wherein an identification in the list of known identifications and/or a converted identification in the list of known converted identifications has a corresponding user identification.

12. Method according to any one claim 9 to 11, on a condition that the RFID tag is accepted, further comprises triggering a response (260) that is dependent on the corresponding user identification.

13. Method according to claim 12, wherein the triggered response is opening a lock or a door.

14. A system for authentication of an RFID tag, wherein the system comprises:
a input unit (380) arranged to detect an identification in an encoded radio signal from a tag (370);
a central system (390) arranged to compare the identification with a list of known identifications, convert the identification, compare the converted identification with a list of known converted identifications and store the identification in the list of known identifications at a position corresponding to the converted identification in the list of known converted identifications.

15. A computer program product adapted to execute a method according to any one claim 1 to 13 on a unit as described in the system of claim 14.
